**Europäisches Patentamt**

**European Patent Office**

**Office européen des brevets**

(11) Publication number: **0 217 495**
A1

(12) # EUROPEAN PATENT APPLICATION

(21) Application number: **86305360.9**

(22) Date of filing: **11.07.86**

(51) Int. Cl.⁴: **G 01 N 27/22**

(30) Priority: **12.07.85 US 754333**

(43) Date of publication of application:
**08.04.87 Bulletin 87/15**

(84) Designated Contracting States:
**DE FR GB IT**

(71) Applicant: **AXIOMATICS CORPORATION**
**60 Rogers Street**
**Cambridge Massachusetts 02142(US)**

(72) Inventor: **Suh, Nam P.**
**34 Maynard Farm Road**
**Sudbury Massachusetts 01776(US)**

(72) Inventor: **von Turkovich, Richard E.**
**125 Chestnut Street, Apt. 1**
**Cambridge Massachusetts 02139(US)**

(72) Inventor: **Waldman, Francis A.**
**93 Governor Winthrop Road**
**Somerville Massachusetts 02145(US)**

(72) Inventor: **Chin, Douglas M.**
**750 Lowell Street**
**Peabody Massachusetts 01960(US)**

(74) Representative: **Smith, Philip Antony et al,**
**REDDIE & GROSE 16 Theobalds Road**
**London WC1X 8PL(GB)**

(54) **Measuring moisture content of flowing material.**

(57) Material in the hopper 10 flows continuously past a sensor 11 which comprises temperature sensors 13 supplying output voltages on lines 14 and 15 and electrode plates 16 and 17 the voltage across which appears on lines 18 and 19. The sensor analog circuitry determines average temperature and the capacitance and dielectric loss and these are fed to a microprocessor which continuously determines the moisture content using stored coefficients appropriate to the material being measured.

SOURCE OF MATERIAL

LEADS TO SENSOR ANALOG CIRCUITRY

FIG. I

MATERIAL OUTPUT

EP 0 217 495 A1

# MEASURING MOISTURE CONTENT OF FLOWING MATERIAL

This invention relates generally to techniques for continuously determining the moisture content of a continually flowing material.

Many techniques have been devised for monitoring the moisture content of a material, most of such techniques utilizing discrete samples, or batches, of material and not being applicable to a continously flowing, or on-line, production environment. For example, known techniques for use in batch processing of materials have been described in various patents including U.S. Patent Nos. 3,781,673 issued on December 25th 1973 to Resn. 4,050,016 issued on September 20th 1977 to Marsh et al., 4,147,976 issued on April 3rd, 1979 to Wano, 4,174,498 issued on November 13th, 1979 to Preikschat, 4,352,059

issued on September 28, 1982 to Sun et al., and 4,399,404 issued on August 16, 1983 to Resh. None of the techniques described therein are applicable to on-line production applications wherein the material whose moisture content is to be measured is continually flowing.

Moreover in those patents which discuss the problem of changes in packing density of the sample being measured occur, proposed solutions to such problem that are proposed therein are also not applicable to continually flowing, on-line systems. For example, certain patents propose solving such problems by either measuring the weight of discrete samples removed from the batch of material or by making a sample container that is configured and operated so as to encourage a particular packing density for each sample. Such approaches are not feasible or economical for on-line moisture monitoring systems.

In addition, only the Sun et al. and Preikschat patents disclose the use of measurements of dielectric loss of the samples involved for monitoring moisture content. In Preikschat, for example, measurements of both dielectric loss and capacitance are made, but neither measurements are used in any way so as to be correlated in any way with packing density characteristics. It is believed that the basic reason that none of the aforesaid known systems are able to provide a satisfactory technique for compensating for packing density changes in an on-line system is that measuring small amounts of

dielectric loss present in most materials is considerably more complicated than merely measuring the dielectric constant of the material. Moreover, in most non-plastic materials whose moisture content is measured the desired moisture content is much higher than that of plastic materials so that simply measuring the effect of moisture on the dielectric constant is sufficient. The computational complexity involved in implementing a suitable technique for compensatng for packing density makes it difficult to achieve such computation in a purely analog measuring system as such devices are configured.

U.S. patent application, Serial No. 489,319, filed on April 28, 1983 by Suh et al. has proposed an on-line system for providing a measurement of dielectric loss and for providing in the overall system techniques for compensating for variations in dielectric loss in a sensor full of material due to variations in temperature and to variations in packing density of the material as it flows through a sensor element. Such technique requires a relatively complicated sensor device which utilizes a pair of reference cells having known moisture contents, one having a substantially zero moisture content and the other having a moisture content substantially equal to the maximum moisture content expected in the material which is being processed. The difference in the dielectric losses of the materials in the first and second reference cells is used to compensate automatically for variations in loss of the sensor due to variations in temperature. Further, the system provides a signal output proportional to packing density so as to compensate for changes in such parameter. The signal output is combined with the measured signal which represents the dielectric loss difference between the flowing material and the material in one of the reference cells so as to compensate for changes in packing density.

While the latter system is the first one known to provide for automatic temperature and packing density compensation in an on-line system, certain disadvantages occur in making and using such system. For example, it is found that the moisture content measurement is subject to errors which arise due to the technique itself as well as to changes in the characteristics of the reference cells which are used. Moreover, when a different material is utilized, a different pair of reference cells is required and the reference cells have to be continually replaced for on-line measurements of various different materials. Further, even when using the same material the reference cells tend to age and change their characteristics and for that reason also they have to be periodically replaced. Moreover, the overall system tends to be physically cumbersome to install and use and relatively expensive to make and maintain.

Accordingly, it is desirable that a system be provided which overcomes such disadvantages in cost and implementation problems while providing even more accurate moisture content measurements.

Brief Summary of the Invention

In accordance with the invention a system for making on-line moisture content measurements utilizes a microprocessor having a carefully selected program, or algorithm, for performing the desired measurement operation. A sensing element used therein is arranged to permit a continually flowing material to flow through a region defined by the sensor structure. As the material is flowing therethrough, the average temperature thereof is determined by using suitable temperature measurement techniques. Further, the loss and capacitance of the sensor element are simultaneously measured as the material flows through the sensor.

The microprocessor responds to the values of the average temperature, dielectric loss and capacitance as so determined and continually determines the moisture content of the material as a function thereof by utilizing a carefully devised program for such determination. Such program is derived using a technique for closely approximating the dielectric loss vs. capacitance relationship for different temperatures and different packing densities at known moisture contents.

It is found that by utilizing such an approach a program can be devised so that the moisture content can be continually determined as a function of temperature, dielectric loss, and capacitance in an accurate and readily implemented manner at a reasonable cost, independently of changes in the packing density of the continually flowing material. Such a technique is useful for measuring the moisture content of any material without the need to provide any changes in the sensing element and the approach can be readily adapted to be utilized for various sizes of sensor elements involved, which varying sizes tend to cause changes in the measured loss and capacitance.

## Description of the Invention

The invention can be described in more detail with the help of the accompanying drawing wherein:

FIG. 1 shows a diagrammatic view of a portion of an overall moisture monitoring system in which material continually flows through a sensing region thereof;

FIG. 2 shows a block diagram depicting the signals handled by a moisture monitoring system in accordance with the invention;

FIG. 3 shows a graph of curves of dielectric loss vs. capacitance for various samples of a material, which curves are useful in deriving an algorithm used in accordance with the invention;

FIG. 4 shows a plan view of a particular embodiment of a sensor element which has been successfully used as the sensor in the embodiment of FIG. 1;

FIG. 5 shows a view in section through lines 5-5 of FIG. 4;

FIG. 6 shows a view in section through lines 6-6 of FIG. 5; and

FIG. 7 shows a wiring circuit for the sensed output voltages from the sensing elements of FIGS. 4-6.

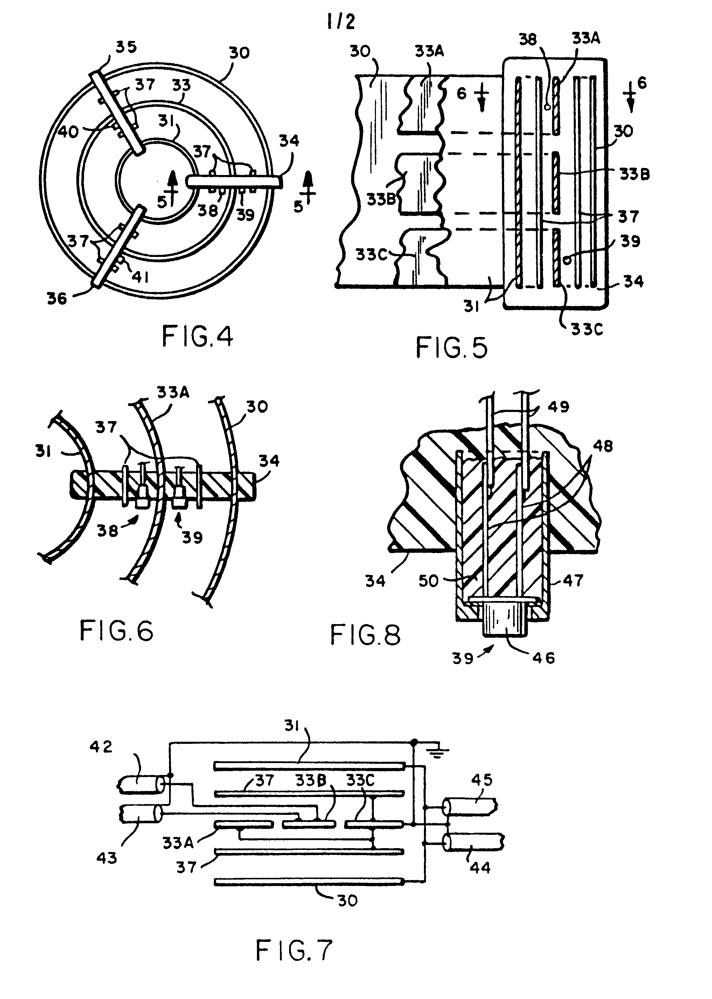

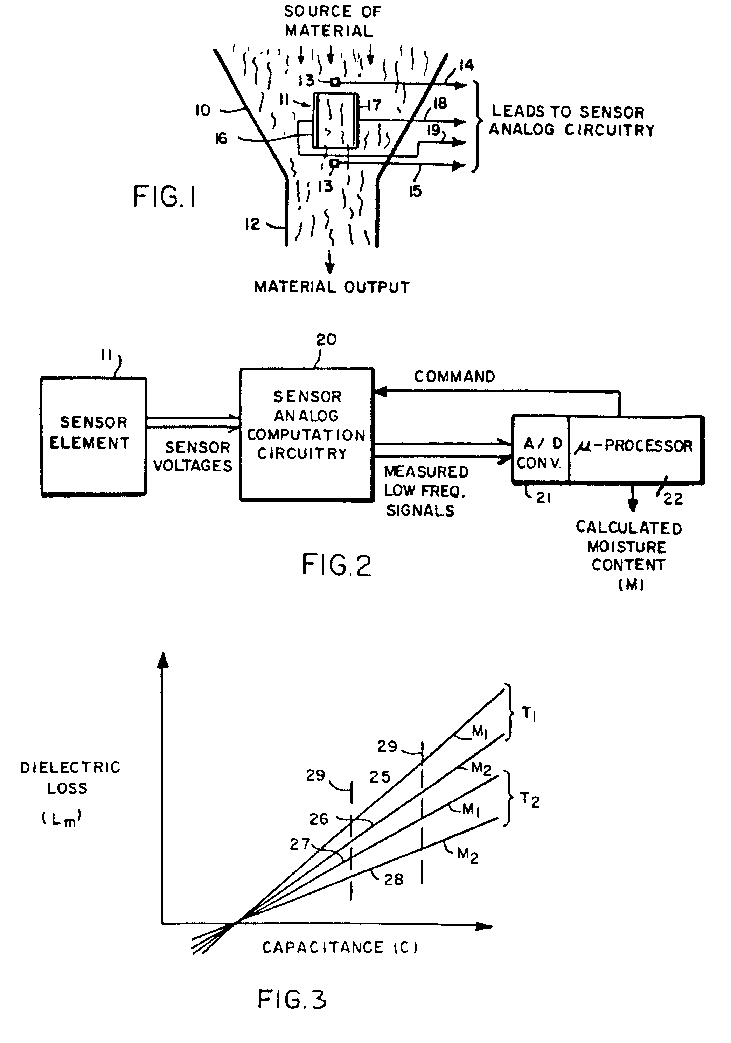

As can be seen diagrammatically in FIG. 1 a source of a material whose moisture content is to be determined can be used to supply such material to a hopper 10 in which is placed a sensing element 11. The material, for example, may be plastic material in the form of small pellets, such pellets continually flowing through and around the sensing element region 11 due to gravity, for example, as shown. The pellets are then supplied to the reduced diameter output end 12 of the hopper for use in whatever application the material is to be utilized. The top and bottom of the hopper are both open so as to facilitate the continual flow of material therethrough. It is desired that the moisture content of the material as it continually flows through the hopper be monitored.

As part of the overall sensing element at least a pair of temperature sensors 13 are suitably positioned relative to the flowing material, e.g., with at least one placed just above and at least one placed just below the electrodes of sensing element 11 and temperature sensor output voltages are supplied on leads 14 and 15 for use in calculating the moisture content of the material as discussed in more detail below.

In its simplest form the sensing element includes a pair of electrode plates 16 and 17 defining a region through

-7-

which material continually flows, the voltage across such plates being supplied on leads 18 and 19 so as to be utilized in measuring the capacitance and dielectric loss between the plates as the material is continually flowing therethrough.

FIG. 2 depicts in block diagram form an overall voltage handling system. As seen therein, sensor element 11 supplies the output sensor voltages discussed above substantially simultaneously to sensor analog computation circuitry. The circuitry utilized therein provides low frequency DC output signals representing the sensed temperature, the current into the sensor and the voltage across plates 16 and 17, which current and voltage are utilized to calculate the loss and the capacitance between the electrodes 16 and 17, as well as the average temperature sensed by the temperature sensor 13. Such signals can be supplied upon command by an appropriate command signal for actuating such circuits when received from a microprocessor 22. The low frequency DC signals i.e., effectively slowly varying analog signals, can be converted into digital signals utilizing an A/D (analog to digital) conversion element 21, as would be well known to the art. The digital signals can then be operated upon by a microprocessor for determining the average temperature, (T), the dielectric loss $(L_m)$, and the capacitance (C), using well known techniques, which parameters can then be utilized by the microprocessor as discussed below for determining the moisture content of the material as it is continually flowing through the region of the sensing element 11.

-8-

In order to understand how the algorithm for determining moisture content, as utilized by the microprocessor, is derived, it is helpful to consider the graph of FIG. 3. If samples of a material whose moisture content is to be determined are obtained and if each sample is arranged so as to have a known packing density, it is possible to plot changes indielectric loss as a function of the capacitance of such material at specified temperatures and moisture contents. Thus, if four such samples are utilized, dielectric loss vs. capacitance curves can be plotted for samples all of which have the same packing density at two different known temperatures $T_1$ and $T_2$ and for two different known moisture contents $M_1$ and $M_2$. Over a particular range of densities which are expected in the continuing flowing material such curves of dialectric loss vs. capacitance can be relatively accurately approximated as straight lines. Four samples having known moisture contents $M_1$ or $M_2$ at known temperatures $T_1$ or $T_2$ are plotted as curves 25, 26, 27 and 28 in the manner shown in FIG. 3.

As can be seen therein, such curves tend to intersect at a point having roughly zero dielectric loss and a capacitance that is higher than the capacitance of the sensor element when it is empty (i.e., when no material is present within the sensor). The temperatures $T_1$ and $T_2$ for making such measurements can be selected so that one is relatively close to the lowest expected operating temperature of the system and the

-9-

other is relatively close to the highest expected operating temperature of the system.

A linearly approximate equation for dielectric loss $(L_m)$ as a function of capacitance $(C)$ for varying temperatures and varying moisture contents can be devised as follows:

$$L_m = (K_0 + K_t*T + K_m*M + K_{tm}*T*M) *C + (B_0 + B_t*T \qquad (1)$$
$$+ B_m*M + B_{tm}*T*M)$$

Each of the curves 25-28 over the range of capacitances depicted between the dashed lines 29 can be approximated very accurately as a straight line, having a known slope and known intercept. Examination of Eq. (1) shows eight unknown coefficients $(K_0, K_t, K_m, K_{tm}, B_0, B_t, B_m,$ and $B_{tm})$. Each of such curves in addition has a known temperature, a known moisture content, a known slope and a known intercept. Accordingly, for such conditions Eq. (1) can be solved using known mathematical techniques to determine the eight K and B coefficients specified above.

Eq. (1) can be used to provide a reasonable approximation over a particular reasonable range of parameters for many applications, particularly since packing tends to be a linear phenomenon even though the thermal response of the material tends to be non-linear. In some applications it may be desirable to use a non-linear approximation by utilizing a higher-order equation for such purpose. One such equation, for example, may be of the following form:

$$L_m = (A*T + B*T^2 + D*T^3 + E*T^4 + F*M + G*M^2)*C \qquad (1A)$$
)

$+(H*T+I*T^2+J*T^3+K*T^4+N*M+O*M^2)$

Once the coefficents are determined Eq. (1), or Eq. 1A, can be placed in a different form so as to solve for the moisture content M.  Such a form for Eq. (1), for example, is as follows:

$$M = \frac{L_m - (K_o + K_t *T)*C - (B_o + B_t *T)}{(K_m + K_{tm}*T)*C + (B_m + B_{tm}*T)} \quad (2)$$

As can be seen in Eq. (2) the moisture content can be computed as a function of loss $L_m$, average temperature T, and capacitance C once the K and B coefficents have been so determined.  Such computation can be made utilizing a microprocessor which is programmed to solve Eq. (2) using known techniques for preparing an algorithm for such purpose.  For example, a microprocessor well known in the art, such as the model MC6809 made and sold by Motorola Corporation, can be readily prepared by using techniques well known to those in theart for using such mircroprocessor to solve Eq. (2).  In response to digital input information with respect to the average temperature T, the loss $L_m$ and the capacitance C of the material flowing through the sensor element, the moisture content as determined in accordance with Eq. (2) produces an accurate computation thereof without errors caused by the packing density so that, in effect, changes in packing density

-11-

are automatically compensated for.

It is further found that the capacitance values change as a function of the size of the sensor element 11 (in effect the size of the region defined by the sensor element through which the material flows). Accordingly it is necessary to take such changes into account in Eq. (2) when sensor elements having different sizes are utilized. The manner in which such changes can be compensated for in implementing the algorithm for solving Eq. (2) is to utilize a particular known size as a reference value for the sensor element and to determine the capacitance $C_{or}$ of such reference element when such sensor element has no material therein (an empty sensor) and to utilize a correction factor which is represented by the ratio of the capacitance $C_{om}$ for another different size sensor element, also as measured without any material therein, relative to the capacitance of the empty reference size element, i.e. the ratio $C_{om}/C_{or}$. Such factor need be utilized only in conjunction with those terms of Eq. (2) which relate to the intercept of the curves shown in Fig. 3 since capacitance changes as a function of size have little effect on the actual slope of the curve. Accordingly, Eq. (2) can be revised for different sizes of sensor elements as shown in Eq. (3) as follows:

$$M = \frac{L_m - (K_o + K_t * T) * C - (B_o + B_t * T) * C_{om}/C_{or}}{(K_m + K_{tm} * T) * C + (B_m + B_{tm} * T) * C_{om}/C_{or}} \qquad (3)$$

As can be seen therein, terms related to temperature
and B coefficients are corrected in accordance with the ratio
$C_{om}/C_{or}$ which correction thereby permits Eq. (3) to take
into account the moisture content of the material when using a
sensor element of a different size from that of the reference
sensor element.

The programming of the microprocessor to solve Eq. (3)
would also be well within the skill of the art for use in any
suitably selected microprocessor as discussed above.

Although the characteristics of the samples of material
used to generate the curves of FIG. 3 permit the coefficients
for such material to be obtained so that the above equations can
be solved for such particular material by the microprocessor,
the microprocessor can also be used for handling the same
general equations for use with other different materials by
performing the same process for determing the K and B
coefficents involved utilizing four samples of the each
different material which may be involved.  Different sets of K
and B coefficients for different materials can be appropriately
stored and selected by the microprocessor for implementing the
equations for such different materials as required.
Accordingly, the system of the invention can be used in a
universal sense for any materials, so long as the coefficents
required for such materials have been appropriately determined
and stored for use by the microprocessor, and for any sensor
element size so long as the appropriate ratios of the

-13-

capacitances (when empty) for such elements to the capacitance for a reference size (when empty) are suitably determined and also stored for use by the microprocessor.

The use of a microprocessor to implement the solution of the above equations overcomes the disadvantages of the on-line system described in the Sun et al. application discussed above, for example, in that such use does not depend on the use of reference samples the characteristics of which change with time and does not require the changing of reference samples for different materials. Moreover, it is believed that the implementation of a computational system using a microprocessor can be done for less cost than previously suggested systems.

Moreover, the use of the aforesaid straight line approximations and the microprocessor computational capability permits a very accurate determination of moisture content for continually flowing materials.

While the invention has been described utilizing a simple sensor element formed as a pair of electrode plates 16 and 17 together with a pair of temperature sensing elements 13 in FIG. 1, FIGS. 3-6 depict a more sophisticated embodiment of a sensor element which is currently preferred for use in the system of the invention. As can be seen in such figures, the sensor element comprises a pair of concentric cylindrical

elements 30 and 31, element 30 representing an outer electrode and element 31 representing an inner electrode. A third concentric element 33 is positioned substantially halfway

between elements 30 and 31 which element is also concentric therewith. Element 33 effectively comprises a split cylindrical configuration such that three, separate cylindrical elements 33a, 33b and 33c are utilized as shown.

A plurality (in this case, three) of plastic struts 34, 35 and 36 are used to support the cylindrical elements 30, 31 and 33. As can be seen in the section views of a part.cular strut 34, for example, in FIGS. 5 and 6, the cylindrical elements pass through the strut and each strut incluces a pair of shield members 37 between the split cylindrical elements 33 and the inner and outer cylindrical elements 30 and 31, respectively, as shown. The shield elements 37 extend substantially along the length of the strut and project slightly beyond the lateral sides thereof, as seen in FIG. 6. A pair of temperature sensing elements 38 and 39 are placed on one side of strut 34 while additional temperature sensing elements 40 and 41 are placed on the sides of struts 35 and 36, respectively, as best shown in FIG. 4. The shield elements 37 are used to prevent any adverse measurement effects due to the struts themselves as well as to act as barriers for minimizing the effects of surface conductivity on the struts which may tend to change due to dust, etc.

In a preferred embodiment of the invention, the temperature sensing elements are configured in a specific manner so as to assure that the temperature sensed in each case accurately represents the temperature of the material rather

-15-

than the temperature of the air surrounding them. Accordingly, the temperature sensors are arranged so that the thermal response characteristics of each sensor substantially approximate, or match, the thermal response characteristics of the flowing material. Such thermal response characteristics are achieved in a particular embodiment by the configuration shown in Fig. 8. As seen therein, an exemplary temperature sensor structure 39 includes a thermally sensitive diode 46, an example of which is one made and sold by National Semiconductor Corporation under the model designation LM135, the diode being mounted within a stainless steel collar member 47. The collar member extends into an opening in a strut, e.g., strut 34. Electrical leads 48 extend from the diode through the collar member where they are soldered to Teflon coated wires 49 which can be brought out from the opposite side of the strut to the electronics circuitry. The leads and Teflon wires are encapsulated with a high temperature epoxy material 50 which can be the same as the epoxy material which forms the strut. Such a material may be, for example, that made and sold by Bacon Industries of Newton, Massachusetts under the designation P-85.

It has been found that the use of a diode package alone substantially fully exposed to the flow of material may provide too rapid a thermal response characteristic compared to that of the flowing materials involved. However, the structure shown in Fig. 8 permits a sufficient amount of the diode package to be exposed to the flowing material, while the use of the stainless

-16-

steel and epoxy mount therefor tends to produce a slower thermal response characteristic for the overall sensor assembly so that it more effectively approximates the thermal response characteristics of the various flowing materials which are expected to be used in the apparatus of the invention.

As can be seen in FIG. 7, the barrier shields 37 are connected to ground as well as the shielded portions of the cables which are connected to the electrodes for measuring the voltage values therebetween. The upper and lower split elements 33A and 33c are grounded while the center split element 33B is connected to the center conductors of cables 42 and 43. The outer electrode 30 and the inner electrode 31 are connected to the center conductors of cables 44 and 45. The cables containing such sensor voltages at the elements 30, 31 and 33B are supplied to the sensor analog electronic circuitry as discussed above with reference to FIG. 2.

The particular sensing element depicted in FIGS. 4-7 has been found effectively to provide simultaneously voltages from the temperature sensing elements and the electrode elements thereof so as to permit accurate conversion of said sensed voltages to usable low frequency (DC) analog voltages which can then be converted to digital signals at A/D converter 21. The digital signals are then appropriately utilized to compute the required loss and capacitance values of the sensor as well as to compute the average value of the four temperature sensors using known computational techniques. Such values can then be used in Eqs. (3) or (4) for permitting the moisture content of the material flowing through the sensor to be suitably monitored on a continuing basis.

As can be seen best in Fig. 1, the sensing element is made sufficiently large that a substantial portion of the continually flowing material passes through the sensing element. Thus, the temperature, dielectric loss and capacitance of a large sample thereof is continually measured and more effectively represents the measured characteristics of the material in comparison with prior art systems which normally make measurements of only relatively small samples of material at any given time. For example, while a prior art system may make measurements on a few grams of material, the system of the invention continually makes its measurements on many pounds of material at any given time.

Moreover, while prior systems tend to use a single temperature probe in a particular sample, the technique of the invention uses a plurality of temperature probes at spaced locations, both radially and vertically(in elevation), so as to provide a better overall averaged temperature measurement. While it may be desirable in some applications to utilize a larger number of struts and temperature sensors than shown in Figs. 4-7, it has been found that the use of three struts and four temperature sensors is acceptable for most applications and does not present an overly complex or expensive form for the sensing element desired.

As can be seen with reference to Figs. 1 and 2, the sensed voltages are suppled by suitable cables to the computation circuits. The partitioning of sensing elements and computation circuitry permits high accuracy computations to be made without limiting the operational temperatures of the sensors involved since the electronic circuitry does not need to be contained within the sensing element. The signals can be carried a reasonable distance from the sensor (e.g., up to 150 feet) or can be mounted in relatively close proximity to the sensor depending on the application in which the system is used. The signal cabling from the sensors can be selected to be of a high temperature, high abrasion type since the materials being measured flow through the sensor in direct contact with the cables and at relatively high temperatures.

While the embodiments discussed above represent currently preferred embodiments of the invention, modifications thereof within the spirit and scope of the invention may be made by those in the art. Hence, the invention is not to be construed as limited thereto except as defined by the apperded claims.

WHAT IS CLAIMED IS:

1.  A method of determining the moisture content of a continually flowing material comprising the steps of

causing said material to flow continually through a region defined by a sensor element;

continually determining the average temperature of said material as said material flows through said region;

continually determining the loss and capacitance of said sensor as said material flows through said region; and

continually determining the moisture content of said material as a function of said average temperature determination and said loss and capacitance determination without errors caused by changes in the packing density of said material as said material flows through said region.

2.  A method in accordance with claim 1 wherein the steps of continually determining the average temperature and continually determining the loss and capacitance are performed simultaneously.

3.  A method in accordance with claim 1 and further wherein said region is made sufficiently large to permit the determination of the temperature of said flowing material at a plurality of points within said region so that the average temperature of a relatively large sample of said flowing material can be determied at any one time.

4. A method in accordance with claim 1 wherein the step of continually determining the loss and capacitance and continually determining the moisture content are performed at a position which is remote from the material flowing through said sensor element.

5. An apparatus for determining the moisture content of a continually flowing material comprising

a sensor element defining a region through which said material can continually flow;

means for continually determining the average temperature of said material as it continually flows through said region;

means for continually determining the loss and capacitance of said sensor element as said material continually flows through said region; and

means responsive to said average temperature determination and to said loss and capacitance determination for continually determining the moisture content of said material without errors caused by changes in the packing density of said material as it flows through said region.

6. An apparatus in accordance with claim 5 wherein said average temperature determining means comprises

a plurality of temperature sensors positioned at selected points within said region for sensing the temperature of said continually flowing material at said selected points; and

means responsive to the temperatures sensed at said selected points for providing an average of said sensed temperatures.

7. An apparatus in accordance with claim 6 wherein said temperature sensors are positioned at different radial points and different elevation points within said region.

8. An apparatus in accordance with claim 7 wherein said sensor element includes a plurality of concentrically mounted cylindrical members interconnected by a plurality of spaced radial struts, at least one of said temperature sensors being positioned on each of said struts.

9. An apparatus in accordance with claim 8 wherein at least one of said cylindrical members comprises a plurality of separate cylinders mounted one above the other on said struts.

10. An apparatus in accordance with claim 8 and further wherein at least one of said struts has at least two temperature sensors mounted thereon at different elevations of

-22-

said sensor element.

11. An apparatus in accordance with claim 8 and further including shield members mounted on each side of and spaced from the at least one temperature sensor on each said strut.

12. An apparatus in accordance with claim 8 wherein the thickness of said cylindrical members is substantially smaller than the distance between them so as to minimize resistance to the continual flow of said material through said sensor element.

13. An apparatus in accordance with claim 6 wherein said temperature sensors are mounted so as to provide thermal response characteristics thereof which approximate the thermal response characteristics of said continually flowing material.

14. An apparatus in accordance with claim 13 wherein each of said temperature sensor comprises

a thermally sensitive diode;

a stainless steel collar member on which said diode is mounted, the electrical leads from said diode extending through said collar member, said leads being encapsulated with a high temperature epoxy material, a portion of said diode and said collar member being exposed to said continually flowing material.

15. An apparatus in accordance with claim 5 wherein said moisture content determining means comprises a microprocessor means.

16. An apparatus in accordance with claim 15 wherein said microprocessor means responds to the determinations of said average temperature, loss and capacitance for continually determining said moisture content in accordance with the following relationship:

$$M = \frac{L_m - (K_o + K_t *T)*C - (B_o + B_t *T)}{(K_m + K_{tm}*T)*C + (B_m + B_{tm}*T)}$$

where M is the moisture content, $L_m$ is the loss, T is the average temperature, C is the capacitance, and $B_o$, $B_c$, $B_m$, $B_{tm}$, $K_o$, $K_t$, $K_m$ and $K_{tm}$ are predetermined coefficients.

17. An apparatus in accordance with claim 15 wherein said microprocessor means responds to the determinations of said average temperature, loss and capacitance for determining said moisture content when using different sizes for said sensor elements in accordance with the following relationship:

$$M = \frac{L_m - (K_o + K_t *T)*C - (B_o + B_t *T)*C_{om}/C_{or}}{(K_m + K_{tm}*T)*C + (B_m + B_{tm}*T)*C_{om}/C_{or}}$$

where M is the moisture content, $L_m$ is the loss, T is the average temperature, C is the capacitance, $B_o$, $B_t$, $B_m$, $B_{tm}$, $K_o$, $K_t$, $K_{tm}$ and $K_{tm}$ are predetermined coefficients, $C_{or}$ is the capacitance of a reference sensor element having a first size, $C_{or}$ being the capacitance when no material is present in the region defined by said reference sensor element, and $C_{om}$ is the capacitance of any other sensor element having a different size than that of said reference sensor element, $C_{com}$ being the capacitance when no material is present in the region defined by said other sensor element.

0217495

1/2

FIG.4

FIG.5

FIG.6

FIG.8

FIG.7

SOURCE OF
MATERIAL

LEADS TO SENSOR
ANALOG CIRCUITRY

FIG.1

MATERIAL OUTPUT

FIG.2

SENSOR
ELEMENT

SENSOR
VOLTAGES

SENSOR
ANALOG
COMPUTATION
CIRCUITRY

MEASURED
LOW FREQ.
SIGNALS

COMMAND

A / D
CONV.

μ-PROCESSOR

CALCULATED
MOISTURE
CONTENT
(M)

DIELECTRIC
LOSS
$(L_m)$

CAPACITANCE (C)

FIG.3

# European Patent Office

## EUROPEAN SEARCH REPORT

Application number

| Category | Citation of document with indication. where appropriate. of relevant passages | Relevant to claim | CLASSIFICATION OF THE APPLICATION (Int Cl 4) |
|---|---|---|---|
| | **DOCUMENTS CONSIDERED TO BE RELEVANT** | | EP 86305360.9 |
| A | <u>DE - A1 - 3 329 135</u> (HOWAG AG) <br> * Abstract; claims; fig. * <br> -- | 1,5 | G 01 N 27/22 |
| A | <u>DE - A1 - 3 038 725</u> (HEINZ WERNER) <br> * Claim 1; fig. 1,2 * <br> -- | 1,5 | |
| A | <u>DE - B1 - 2 522 826</u> (HAUNI-WERKE) <br> * Totality * <br> -- | 1,5 | |
| A | <u>DD - A - 160 080</u> (GEBRUEDER BUEHLER) <br> * Abstract; claims; fig. 1-7 * <br> -- | 1,5 | |
| A | <u>DD - A - 156 400</u> (POPPEI) <br> * Abstract; claims * <br> ---- | 1,5 | **TECHNICAL FIELDS SEARCHED (Int Cl 4)** <br><br> G 01 N 27/00 <br> G 01 R 27/00 <br> G 01 N 33/00 |

The present search report has been drawn up for all claims

| Place of search | Date of completion of the search | Examiner |
|---|---|---|
| VIENNA | 17-12-1986 | ERBER |